# EUROPEAN PATENT APPLICATION

(11) **EP 4 202 788 A1**
(43) Date of publication of application: **28.06.2023**
(21) Application number: 22209489.8
(22) Date of filing: 24.11.2022
(51) Int. Cl.: G06N 5/01, G06N 20/00, G05D 1/00

(54) **SYSTEM AND METHOD OF USING A MACHINE LEARNING MODEL TO AID A PLANNING STACK TO CHOOSE A ROUTE**

(30) Priority: 22.12.2021 US 202117559244
(71) Applicant: GM Cruise Holdings LLC, San Francisco, CA 94107 (US)
(72) Inventor: JIANG, Frank, San Francisco, 94107 (US); JIN, Ou, San Francisco, 94107 (US)
(74) Representative: Barton, Russell Glen

(57) **Abstract**

Disclosed herein are systems and method including a method for managing an autonomous vehicle. The method includes providing input associated with an autonomous vehicle to a machine learning model, wherein the machine learning model is trained to predict what a planning stack of the autonomous vehicle will choose with respect to selecting a low cost branch of a tree structure in which a plurality of branches of the tree structure are evaluated to determine the low cost branch associated with a future route for the autonomous vehicle. The method further includes generating an output of the machine learning model to predict an output of the planning stack and inputting the output of the machine learning model into the planning stack. The planning stack can traverse a tree structure of possible routes more efficiently with a predicted outcome based on the output of the machine learning model.

## Description

### Field of the Disclosure

The present disclosure relates to autonomous vehicles (AVs) and furthermore to a machine learning model that is trained on likely optimal path decisions of a planning stack such that the output of the machine learning model can be provided to the planning stack to reduce a number of branches of a tree structure that needs to be searched by the planning stack to find an optimal path.

### Introduction

Autonomous vehicles (AVs) at least to some degree are starting to appear on our roads. In some cases, an AV includes sensors that determine whether other vehicles or objects are in its way. A control system or planning stack on the AV evaluates the data from the sensors to prevent collisions. The planning stack however analyzes a number of different branches in a tree structure to find a lowest or optimally low-cost decision with respect to an AV path. This is a computationally expensive process.

### BRIEF DESCRIPTION OF THE FIGURES

Illustrative examples of the present application are described in detail below with reference to the following figures:
FIG. 1 illustrates an example of a system for managing one or more Autonomous Vehicles (AVs) in accordance with some aspects of the present technology;
FIG. 2 illustrates an example tree structure used by the planning stack to determine the route of the AV, according to some aspects of this disclosure;
FIG. 3 illustrates the training data used to train a machine learning model in the likely output of the planning stack, according to some aspects of this disclosure;
FIG. 4 illustrates how the output of the machine learning model can be provided to the planning stack to ultimately select an optimal path for the AV, according to some aspects of this disclosure;
FIG. 5 illustrates how the output of the machine learning model can reduce the number of branches that need to be evaluated by the planning stack, according to some aspects of this disclosure;
FIG. 6 illustrates a method associated with using a machine learning model, according to some aspects of this disclosure;
FIG. 7 illustrates another method related to using the machine learning model to plan routes for the AV, according to some aspects of this disclosure; and
FIG. 8 illustrates a computing device which can be used in the various examples disclosed herein.

### DETAILED DESCRIPTION

Certain aspects and examples of this disclosure are provided below. Some of these aspects and examples may be applied independently and some of them may be applied in combination as would be apparent to those of skill in the art. In the following description, for the purposes of explanation, specific details are set forth in order to provide a thorough understanding of the concepts disclosed in the application. However, it will be apparent that various examples may be practiced without these specific details. The figures and description are not intended to be restrictive. Any feature in any respective example can be combined with any other feature of any other example.

The ensuing description provides exemplary concepts only, and is not intended to limit the scope, applicability, or configuration of the disclosure. Rather, the ensuing description of the exemplary concepts will provide those skilled in the art with an enabling description for implementing an exemplary concepts. It should be understood that various changes may be made in the function and arrangement of elements without departing from the spirit and scope of the application as set forth in the appended claims.

### Brief Introduction of the Disclosure

This disclosure focuses on an improvement to how the planning stack in an autonomous vehicle (AV) works. Because of the complicated processing required for the planning stack to sequentially process each branch of a tree structure of potential routes for the AV to take, in order to find the optimal or sufficiently low cost route, the disclosure introduces the use of a separate machine learning algorithm that can predict, without knowing or using the cost analysis, what the outcome of the planning stack might be given a set of inputs. The data provided from the machine learning model can be used to prune or reduce the number of branches that the planning stack needs to evaluate by giving the planning stack a hint as to where it will likely end up.

An example method in this regard includes providing input associated with an autonomous vehicle to a machine learning model, wherein the machine learning model is trained to predict what a planning stack of the autonomous vehicle will choose with respect to selecting a low cost branch of a tree structure in which a plurality of branches of the tree structure are evaluated to determine the low cost branch associated with a future route for the autonomous vehicle. The method can include generating an output of the machine learning model to predict an output of the planning stack and inputting the output of the machine learning model into the planning stack. The planning stack can use the predicted outcome from the machine learning model to more efficiently traverse the tree structure so that one or more branches that previously would have been processed do not have to be processed based on the intelligence gained from the machine learning model output.

The method can further include processing the output of the machine learning model in the planning stack to reduce a number of branches to be evaluated to determine the lowest cost branch. In another aspect, different losses can exist such as a first loss associated with predicting an optimal trajectory, a second loss associated with predicting a cost to the optimal trajectory and a third loss associated with seeking to minimize the predicted cost of a predicted optimal trajectory of the autonomous vehicle. The method can include combining in one of a number of different ways, two or more of these losses when determining what the output of the machine learning model will be which will be fed into the planning stack.

An example system can include a processor and a computer-readable storage device storing instructions which, when executed by the processor, cause the processor to perform operations including providing input associated with an autonomous vehicle to a machine learning model, wherein the machine learning model is trained to predict what a planning stack of the autonomous vehicle will choose with respect to selecting a low cost branch of a tree structure in which a plurality of branches of the tree structure are evaluated to determine a lowest cost branch associated with a future route for the autonomous vehicle. The operations can include generating an output of the machine learning model to predict an output of the planning stack and inputting the output of the machine learning model into the planning stack.

A computer readable storage device can storge instructions which, when executed by a processor, cause the processor to perform operations including providing input associated with an autonomous vehicle to a machine learning model, wherein the machine learning model is trained to predict what a planning stack of the autonomous vehicle will choose with respect to selecting a low cost branch of a tree structure in which a plurality of branches of the tree structure are evaluated to determine a lowest cost branch associated with a future route for the autonomous vehicle. The operations can include generating an output of the machine learning model to predict an output of the planning stack and inputting the output of the machine learning model into the planning stack.

Another method example can include generating, via a machine learning model, a prediction of one or more branches of a tree structure used by a planning stack of an autonomous vehicle to determine a low cost branch which will be used to determine a route of the autonomous vehicle, providing the prediction of the one or more branches to the planning stack, using the prediction to determine a potential trajectory of the autonomous vehicle and, based on the potential trajectory, determining, via the planning stack, the route of the autonomous vehicle by selecting a low cost branch in the tree structure.

Another example system can include a processor and a computer-readable storage device storing instructions which, when executed by the processor, cause the processor to perform operations including generating, via a machine learning model, a prediction of one or more branches of a tree structure used by a planning stack of an autonomous vehicle to determine a low cost branch which will be used to determine a route of the autonomous vehicle, providing the prediction of the one or more branches to the planning stack, using the prediction to determine a potential trajectory of the autonomous vehicle and, based on the potential trajectory, determining, via the planning stack, the route of the autonomous vehicle by selecting a low cost branch in the tree structure.

A computer readable storage device can storge instructions which, when executed by a processor, cause the processor to perform operations including: generating, via a machine learning model, a prediction of one or more branches of a tree structure used by a planning stack of an autonomous vehicle to determine a low cost branch which will be used to determine a route of the autonomous vehicle, providing the prediction of the one or more branches to the planning stack, using the prediction to determine a potential trajectory of the autonomous vehicle and, based on the potential trajectory, determining, via the planning stack, the route of the autonomous vehicle by selecting a low cost branch in the tree structure.

### Detailed Description of the Disclosure

The present disclosure addresses the problem with respect to the number of occurrences which an autonomous vehicle might be stopped behind various objects within its environment. For example, there are a relatively large number of situations in which the AV comes up behind a slow-moving or stationary vehicle and does not make the appropriate move around the vehicle. In some situations, the AV might be stopped behind a slow or stationary bike or behind pedestrians. In other cases, the AV does not properly yield for pedestrians and is not properly yielding for bicycles.

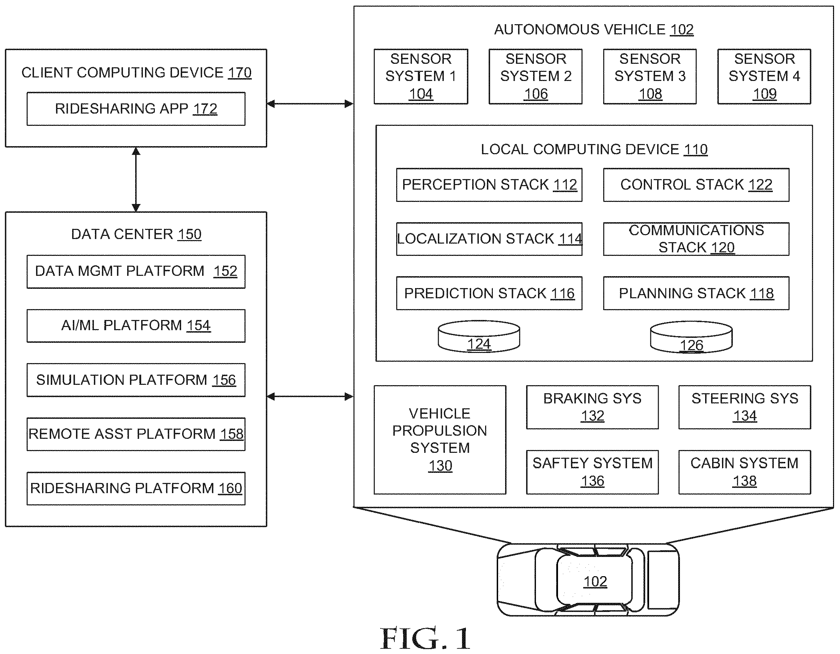

FIG. 1 illustrates an example of an AV management system 100. One of ordinary skill in the art will understand that, for the AV management system 100 and any system discussed in the present disclosure, there can be additional or fewer components in similar or alternative configurations. The illustrations and examples provided in the present disclosure are for conciseness and clarity. Other examples may include different numbers and/or types of elements, but one of ordinary skill the art will appreciate that such variations do not depart from the scope of the present disclosure.

In this example, the AV management system 100 includes an autonomous vehicle (AV) 102, a data center 150, and a client computing device 170. The AV 102, the data center 150, and the client computing device 170 can communicate with one another over one or more networks (not shown), such as a public network (e.g., the Internet, an Infrastructure as a Service (IaaS) network, a Platform as a Service (PaaS) network, a Software as a Service (SaaS) network, other Cloud Service Provider (CSP) network, etc.), a private network (e.g., a Local Area Network (LAN), a private cloud, a Virtual Private Network (VPN), etc.), and/or a hybrid network (e.g., a multi-cloud or hybrid cloud network, etc.).

The AV 102 can navigate roadways without a human driver based on sensor signals generated by multiple sensor systems 104, 106, 108 and 109. The sensor systems 104-109 can include different types of sensors and can be arranged about the AV 102. For instance, the sensor systems 104-109 can include Inertial Measurement Units (IMUs), cameras (e.g., still image cameras, video cameras, etc.), light sensors (e.g., LIDAR systems, ambient light sensors, infrared sensors, etc.), RADAR systems, GPS receivers, audio sensors (e.g., microphones, Sound Navigation and Ranging (SONAR) systems, ultrasonic sensors, etc.), engine sensors, speedometers, tachometers, odometers, altimeters, tilt sensors, impact sensors, airbag sensors, seat occupancy sensors, open/closed door sensors, tire pressure sensors, rain sensors, and so forth. For example, the sensor system 104 can be a camera system, the sensor system 106 can be a LIDAR system, and the sensor system 108 can be a RADAR system. Sensor system 109 can be a different type of sensor such as a camera. Other examples may include any other number and type of sensors.

The AV 102 can also include several mechanical systems that can be used to maneuver or operate the AV 102. For instance, the mechanical systems can include a vehicle propulsion system 130, a braking system 132, a steering system 134, a safety system 136, and a cabin system 138, among other systems. The vehicle propulsion system 130 can include an electric motor, an internal combustion engine, or both. The braking system 132 can include an engine brake, brake pads, actuators, and/or any other suitable componentry configured to assist in decelerating the AV 102. The steering system 134 can include suitable componentry configured to control the direction of movement of the AV 102 during navigation. The safety system 136 can include lights and signal indicators, a parking brake, airbags, and so forth. The cabin system 138 can include cabin temperature control systems, in-cabin entertainment systems, and so forth. In some examples, the AV 102 might not include human driver actuators (e.g., steering wheel, handbrake, foot brake pedal, foot accelerator pedal, turn signal lever, window wipers, etc.) for controlling the AV 102. Instead, the cabin system 138 can include one or more client interfaces (e.g., Graphical User Interfaces (GUIs), Voice User Interfaces (VUls), etc.) for controlling certain aspects of the mechanical systems 130-138.

The AV 102 can additionally include a local computing device 110 that is in communication with the sensor systems 104-109, the mechanical systems 130-138, the data center 150, and the client computing device 170, among other systems. The local computing device 110 can include one or more processors and memory, including instructions that can be executed by the one or more processors. The instructions can make up one or more software stacks or components responsible for controlling the AV 102; communicating with the data center 150, the client computing device 170, and other systems. receiving inputs from riders, passengers, and other entities within the AV's environment. The instructions can further make up one or more software stacks or components responsible for logging metrics collected by the sensor systems 104-109 and so forth. In this example, the local computing device 110 includes a perception stack 112, a mapping and localization stack 114, a prediction stack 116, a planning stack 118, a communications stack 120, a control stack 122, an AV operational database 124, and a high definition (HD) geospatial database 126, among other stacks and systems.

The perception stack 112 can enable the AV 102 to "see" (e.g., via cameras, LIDAR sensors, infrared sensors, RADAR, etc.), "hear" (e.g., via microphones, ultrasonic sensors, etc.), and/or "feel" (e.g., pressure sensors, force sensors, impact sensors, etc.) its environment using information from the sensor systems 104-109, the mapping and localization stack 114, the HD geospatial database 126, other components of the AV, and other data sources (e.g., the data center 150, the client computing device 170, third party data sources, etc.). The perception stack 112 can detect and classify objects and determine their current locations, speeds, directions, and the like. In addition, the perception stack 112 can determine the free space around the AV 102 (e.g., to maintain a safe distance from other objects, change lanes, park the AV, etc.). The perception stack 112 can also identify environmental uncertainties, such as where to look for moving objects, flag areas that may be obscured or blocked from view, and so forth. In some examples, an output of the perception stack can be a bounding area around a perceived object that can be associated with a semantic label that identifies the type of object that is within the bounding area, the kinematic of the object (i.e., information about its movement), a tracked path of the object, and/or a description of the pose of the object (its orientation or heading, etc.).

The mapping and localization stack 114 can determine the AV's position and orientation (pose) using different methods from multiple systems (e.g., GPS, IMUs, cameras, LIDAR, RADAR, ultrasonic sensors, the HD geospatial database 122, etc.). For example, in some examples, the AV 102 can compare sensor data captured in real-time by the sensor systems 104-109 to data in the HD geospatial database 126 to determine its precise (e.g., accurate to the order of a few centimeters or less) position and orientation. The AV 102 can focus its search based on sensor data from one or more first sensor systems (e.g., GPS) by matching sensor data from one or more second sensor systems (e.g., LIDAR). If the mapping and localization information from one system is unavailable, the AV 102 can use mapping and localization information from a redundant system and/or from remote data sources.

The prediction stack 116 can receive information from the localization stack 114 and objects identified by the perception stack 112 and predict a future path for the objects. In some examples, the prediction stack 116 can output several likely paths that an object is predicted to take along with a probability associated with each path. For each predicted path, the prediction stack 116 can also output a range of points along the path corresponding to a predicted location of the object along the path at future time intervals along with an expected error value for each of the points that indicates a probabilistic deviation from that point.

The planning stack 118 can determine how to maneuver or operate the AV 102 safely and efficiently in its environment. For example, the planning stack 116 can receive the location, speed, and direction of the AV 102, geospatial data, data regarding objects sharing the road with the AV 102 (e.g., pedestrians, bicycles, vehicles, ambulances, buses, cable cars, trains, traffic lights, lanes, road markings, etc.) or certain events occurring during a trip (e.g., emergency vehicle blaring a siren, intersections, occluded areas, street closures for construction or street repairs, double-parked cars, etc.), traffic rules and other safety standards or practices for the road, user input, and other relevant data for directing the AV 102 from one point to another and outputs from the perception stack 112, localization stack 114, and prediction stack 116. The planning stack 118 can determine multiple sets of one or more mechanical operations that the AV 102 can perform (e.g., go straight at a specified rate of acceleration, including maintaining the same speed or decelerating; turn on the left blinker, decelerate if the AV is above a threshold range for turning, and turn left; turn on the right blinker, accelerate if the AV is stopped or below the threshold range for turning, and turn right; decelerate until completely stopped and reverse; etc.), and select the best one to meet changing road conditions and events. If something unexpected happens, the planning stack 118 can select from multiple backup plans to carry out. For example, while preparing to change lanes to turn right at an intersection, another vehicle may aggressively cut into the destination lane, making the lane change unsafe. The planning stack 118 could have already determined an alternative plan for such an event. Upon its occurrence, it could help direct the AV 102 to go around the block instead of blocking a current lane while waiting for an opening to change lanes.

This disclosure further refines the planning stack 118 in one sense by providing a new input to the planning stack 118 which is the output of a machine learning model that predicts what the planning stack will choose with respect to a branch of a tree structure that is typically traversed by the planning stack 118 until a satisfactory solution (such as a zero-cost solution) is found or the system runs out of time. This disclosure introduces some new concepts that improve the processing of the planning stack 118.

The control stack 122 can manage the operation of the vehicle propulsion system 130, the braking system 132, the steering system 134, the safety system 136, and the cabin system 138. The control stack 122 can receive sensor signals from the sensor systems 104-109 as well as communicate with other stacks or components of the local computing device 110 or a remote system (e.g., the data center 150) to effectuate operation of the AV 102. For example, the control stack 122 can implement the final path or actions from the multiple paths or actions provided by the planning stack 118. This can involve turning the routes and decisions from the planning stack 118 into commands for the actuators that control the AV's steering, throttle, brake, and drive unit.

The communication stack 120 can transmit and receive signals between the various stacks and other components of the AV 102 and between the AV 102, the data center 150, the client computing device 170, and other remote systems. The communication stack 120 can enable the local computing device 110 to exchange information remotely over a network, such as through an antenna array or interface that can provide a metropolitan WIFI network connection, a mobile or cellular network connection (e.g., Third Generation (3G), Fourth Generation (4G), Long-Term Evolution (LTE), 5th Generation (5G), etc.), and/or other wireless network connection (e.g., License Assisted Access (LAA), Citizens Broadband Radio Service (CBRS), MULTEFIRE, etc.). The communication stack 120 can also facilitate the local exchange of information, such as through a wired connection (e.g., a user's mobile computing device docked in an in-car docking station or connected via Universal Serial Bus (USB), etc.) or a local wireless connection (e.g., Wireless Local Area Network (WLAN), Bluetooth^{®}, infrared, etc.).

The HD geospatial database 126 can store HD maps and related data of the streets upon which the AV 102 travels. In some examples, the HD maps and related data can include multiple layers, such as an areas layer, a lanes and boundaries layer, an intersections layer, a traffic controls layer, and so forth. The areas layer can include geospatial information indicating geographic areas that are drivable (e.g., roads, parking areas, shoulders, etc.) or not drivable (e.g., medians, sidewalks, buildings, etc.), drivable areas that constitute links or connections (e.g., drivable areas that form the same road) versus intersections (e.g., drivable areas where two or more roads intersect), and so on. The lanes and boundaries layer can include geospatial information of road lanes (e.g., lane centerline, lane boundaries, type of lane boundaries, etc.) and/or related attributes (e.g., direction of travel, speed limit, lane type, etc.). The lanes and boundaries layer can also include 3D attributes related to lanes (e.g., slope, elevation, curvature, etc.). The intersections layer can include geospatial information of intersections (e.g., crosswalks, stop lines, turning lane centerlines and/or boundaries, etc.) and related attributes (e.g., permissive, protected/permissive, or protected only left turn lanes; legal or illegal u-turn lanes; permissive or protected only right turn lanes, etc.). The traffic controls lane can include geospatial information of traffic signal lights, traffic signs, and other road objects and related attributes.

The AV operational database 124 can store raw AV data generated by the sensor systems 104-109, stacks 112 - 122, and other components of the AV 102 and/or data received by the AV 102 from remote systems (e.g., the data center 150, the client computing device 170, etc.). In some examples, the raw AV data can include HD LIDAR point cloud data, image data, RADAR data, GPS data, and other sensor data that the data center 150 can use for creating or updating AV geospatial data or for creating simulations of situations encountered by AV 102 for future testing or training of various machine learning algorithms that are incorporated in the local computing device 110.

The data center 150 can be a private cloud (e.g., an enterprise network, a co-location provider network, etc.), a public cloud (e.g., an Infrastructure as a Service (IaaS) network, a Platform as a Service (PaaS) network, a Software as a Service (SaaS) network, or other Cloud Service Provider (CSP) network), a hybrid cloud, a multi-cloud, and so forth. The data center 150 can include one or more computing devices remote to the local computing device 110 for managing a fleet of AVs and AV-related services. For example, in addition to managing the AV 102, the data center 150 may also support a ridesharing service, a delivery service, a remote/roadside assistance service, street services (e.g., street mapping, street patrol, street cleaning, street metering, parking reservation, etc.), and the like.

The data center 150 can send and receive various signals to and from the AV 102 and the client computing device 170. These signals can include sensor data captured by the sensor systems 104-109, roadside assistance requests, software updates, ridesharing pick-up and drop-off instructions, and so forth. In this example, the data center 150 includes a data management platform 152, an Artificial Intelligence/Machine Learning (AI/ML) platform 154, a simulation platform 156, a remote assistance platform 158, and a ridesharing platform 160, among other systems.

The data management platform 152 can be a "big data" system capable of receiving and transmitting data at high velocities (e.g., near real-time or real-time), processing a large variety of data and storing large volumes of data (e.g., terabytes, petabytes, or more of data). The varieties of data can include data having different structured (e.g., structured, semi-structured, unstructured, etc.), data of different types (e.g., sensor data, mechanical system data, ridesharing service, map data, audio, video, etc.), data associated with different types of data stores (e.g., relational databases, key-value stores, document databases, graph databases, column-family databases, data analytic stores, search engine databases, time series databases, object stores, file systems, etc.), data originating from different sources (e.g., AVs, enterprise systems, social networks, etc.), data having different rates of change (e.g., batch, streaming, etc.), or data having other heterogeneous characteristics. The various platforms and systems of the data center 150 can access data stored by the data management platform 152 to provide their respective services.

The AI/ML platform 154 can provide the infrastructure for training and evaluating machine learning algorithms for operating the AV 102, the simulation platform 156, the remote assistance platform 158, the ridesharing platform 160, the cartography platform 162, and other platforms and systems. Using the AI/ML platform 154, data scientists can prepare data sets from the data management platform 152; select, design, and train machine learning models; evaluate, refine, and deploy the models; maintain, monitor, and retrain the models and so forth.

The simulation platform 156 can enable testing and validation of the algorithms, machine learning models, neural networks, and other development efforts for the AV 102, the remote assistance platform 158, the ridesharing platform 160, the cartography platform 162, and other platforms and systems. The simulation platform 156 can replicate a variety of driving environments and/or reproduce real-world scenarios from data captured by the AV 102, including rendering geospatial information and road infrastructure (e.g., streets, lanes, crosswalks, traffic lights, stop signs, etc.) obtained from the cartography platform 162; modeling the behavior of other vehicles, bicycles, pedestrians, and other dynamic elements; simulating inclement weather conditions, different traffic scenarios, and so forth.

The remote assistance platform 158 can generate and transmit instructions regarding the operation of the AV 102. For example, in response to an output of the AI/ML platform 154 or other system of the data center 150, the remote assistance platform 158 can prepare instructions for one or more stacks or other components of the AV 102.

The ridesharing platform 160 can interact with a customer of a ridesharing service via a ridesharing application 172 executing on the client computing device 170. The client computing device 170 can be any type of computing system, including a server, desktop computer, laptop, tablet, smartphone, smart wearable device (e.g., smartwatch, smart eyeglasses or other Head-Mounted Display (HMD), smart ear pods, or other smart in-ear, on-ear, or over-ear device, etc.), gaming system, or other general purpose computing device for accessing the ridesharing application 172. The client computing device 170 can be a customer's mobile computing device or a computing device integrated with the AV 102 (e.g., the local computing device 110). The ridesharing platform 160 can receive requests to pick up or drop off from the ridesharing application 172 and dispatch the AV 102 for the trip.

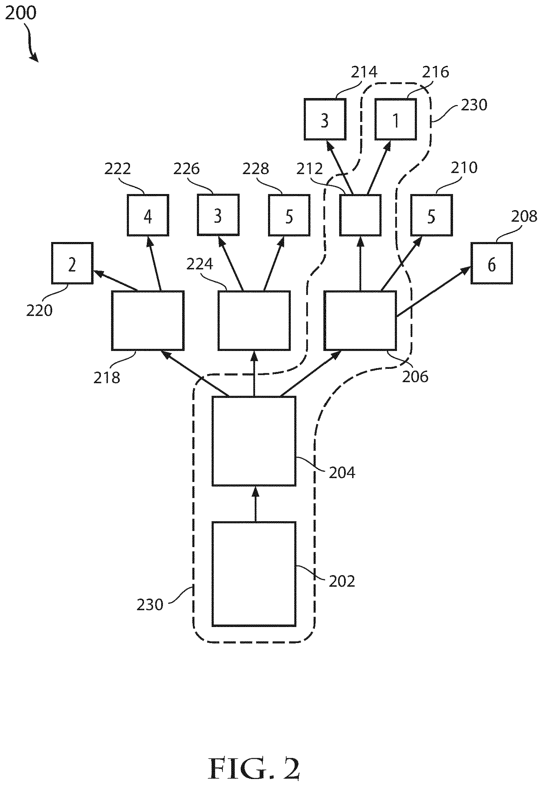

As noted above, this disclosure provides improvements to one or more of the components shown in FIG. 1. FIG. 2 illustrates an example tree structure 200 used by the planning stack 118 to traverse in a sequential fashion to find an optimal path or branch 230 to use for implementing a path or route for the AV 102. As shown, example branches or options are shown for a tree structure 200 which represents the various potential routes that the AV 102 will take based on the decisions made by the planning stack 118. The options include branches 202, 204, 206, 208, 210, 212, 214, 216, 218, 220, 222, 224, 226, 228. Note that at the end of various branches (such as the branch defined by branches 218 and 220), there are identified costs. For example branch 220 has a cost of 2, branch 222 has a cost of 4, branch 226 a cost of 3, branch 228 a cost of 5, branch 3 a cost of 3, branch 216 a cost of 1, branch 210 a cost of 5 and branch 208 a cost of 6. These costs can represent one or more of the amount of risk, danger collision and so forth for each branch. Thus, in one example, after evaluating in a sequential fashion all of the branches of the tree structure 200, the planning stack 118 might select a branch or a route 230 based on the value of "1" being the lowest cost relative to other branches. The tree structure 200 is only one example of how different branches of the tree might be represented. Generally, those of skill in the art will understand how the basic tree structure 200 will be used. Note that the challenge with such a structure is that the planning stack 118 must sequentially evaluate each branch and determine costs of each branch to ultimately identify the route to be taken by the AV 102 based on a least cost branch 230 or an acceptable cost for the branch. The planning stack 118 may focus on given different trajectories, such as those with values of 4 or less (branches 220, 222, 226, 214, 216). Then the planning stack 118 will iterate to improve the trajectory and remove those costs such as by choosing routes that avoid a collision. Whether it is a tree structure or some other structure used to evaluate costs, the planning stack 118 can improve its speed of processing by reducing the space which is has to evaluate based on the data from the machine learning model as disclosed herein.

Note that branch 202, for example, might represent an initial trajectory that the AV 102 should take. The initial trajectory typically is to keep driving straight in the current lane of the AV 102. Branch 204 might further represent that the AV 102 should continue to drive straight or perhaps take one turn. If that occurs, an obstacle such as a car or a light might be present. Then, multiple options might arise represented by branches 206, 224, 218, which each might have a cost or likelihood of collision. The tree structure 200 branches further given each of those options.

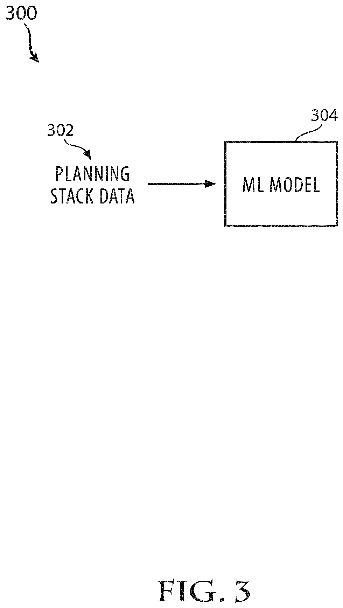

The solution disclosed herein is to use train a machine learning model with the inputs to the model representing the inputs to the planning stack 118 and predict, via the machine learning model, the output of the planning stack 118. FIG. 3 illustrates the overall view 300 of the planning stack data 302 that is input to the machine learning model 304 to train the model for predicting the outcome of the planning stack 118. The motivation is to train the machine learning model 304 to speed up the planning stack's ability to search for a solution trajectory (route) for the AV 102 to follow. In one aspect, labelers can label the planning stack data 302 which can include both planning stack input and output (chosen branch or branches) to label the data such that the machine learning model 304 can predict the output without going through the cost analysis on a branch-by-branch basis.

The planning stack data 302 can include map features such as a high definition map of one or more of the road, lights, curbs, lanes, buildings, etc. This can include static and dynamic elements in the map. That data can be obtained by perception systems (sensors 104, 106, 108, 109) and/or tracking systems. The planning stack data 302 can also include the AV intent, meaning the desired location of the AV or where it desires to go. The idea is to try and predict the chosen trajectory of the AV 102 outside of the planning stack 118 normal process which includes the cost analysis across the branches of the tree structure. The planning stack 118 can be run online where data is taken directly from the road or the system can run the planning stack 118 offline with simulated data. Either way, the solution trajectory of the planning stack 118 can be used to label the data for the machine learning model 304 to learn what the planning stack solution might be but without using the iterative and slow processing of the actual planning stack 118. The machine learning model 304 seeks to be trained to copy the output or chosen trajectory of the planning stack 118 but without any understanding about the costs. In other words, the machine learning model 304 will not use the same iterative process of evaluating all of the various branches of the tree structure 200 or performing the cost analysis but will rather simply predict the output based on the input data 302.

The output of the planning stack 118 is like a sequence of points or a sequence of poses for the AV 102. It can include kinematics or a sequence of positions, velocities and/or accelerations associated with the planned route of the AV 102 based on the chosen trajectory.

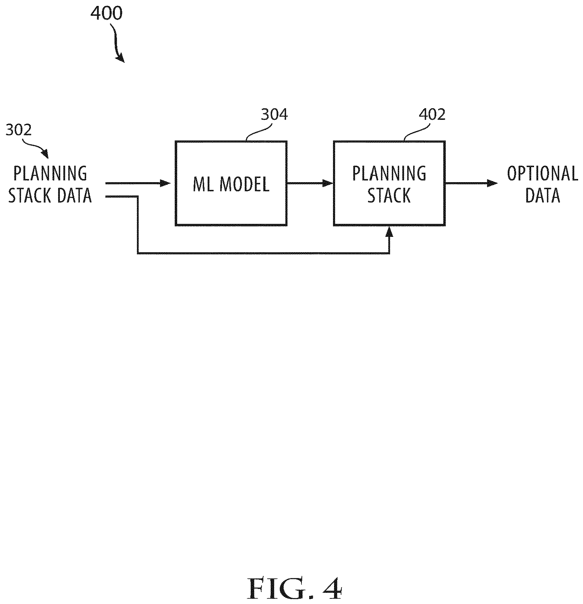

FIG. 4 illustrates the overall structure 400 of how the planning stack data 302 is provided both to the machine learning model 304 that is trained as well as to the planning stack 402. The output of the machine learning model 304 is also provided to the planning stack 402 and can be used to constrain how many branches of the tree structure 200 need to be traversed or evaluated. In one example, the prediction from the machine learning model 302 can include optimal data which can relate to the likely branch or branches that the planning stack 118 would have ultimately chosen if it had iterated or processed the input in the normal manner. However, the system may not need to iterate on all of the branches shown in FIG. 2 if just one or a few branches are preliminarily identified based on the output of the machine learning model 304.

For example, the planning stack 118 may simply check that the output of the model is correct or sufficiently low in cost to be the selected route for the AV 102. If the output is suboptimal, the planning stack 118 can start searching from that trajectory output by the machine learning model 304 instead of beginning from a more naive starting point.

In one aspect, the planning stack data 302 could include cost data as well. The system could sample (randomly or with a pattern) many different trajectories and run them through the planning stack 118 and obtain the cost for each one. The planning stack 118 takes inputs (which might be predictions) and assigns a cost to the proposed AV solution. In this sense, the costs are 100% correct, because the planning stack 118 is deterministic, and will give the same cost every single time for a given set of inputs. Some of the trajectories might have a high cost and likely cause a collision, for example. All of that data could then be used to train the model 304 so that the model in one aspect can learn the costs of each trajectory. As noted above, one aspect of this disclosure involves training the model independent of the costs of different trajectories. The model is then used to predict the optimal trajectory. Another aspect involves training using the costs of each respective trajectory. This second aspect can include predicting the cost for a group of (trajectory, cost) pairs that are generated. The second aspect can also include just predicting the cost for a given input trajectory.

The model in one aspect as well can have two parts. For example, a first part can include predicting, via the machine learning model 304, an optimal trajectory. That predicted trajectory can then be fed into the model 304 to give an estimate of the cost for the predicted trajectory. The system can also seek to minimize the predicted cost for the predicted ultimate trajectory. In one aspect, the system can take an error from the second stage or second part and can feed that back into the model or the path prediction component and iterate until the predicted cost is reduced to a satisfactory level.

In the use of or training of the model 304, there can be a number of different losses, such as a loss associated with predicting the optimal trajectory, a loss associated with predicting the cost for the predicted optimal trajectory, and a loss associated with the process of seeking to minimize the predicted cost of the predicted optimal trajectory. In dealing with the losses, the system may average any two or more of the losses together (such as the first and the second loss, for example).

One example of how the processing of data would work in practice is where the machine learning model 304 might predict an optimal solution in which the AV 102 should get 1.5 seconds behind a car in front of the AV 102. Or it might predict that the AV 102 should get 0.5 seconds behind the front car. It may not understand why 0.5 seconds is much worse than 1.5 seconds. Both of these positions might be close to the optimal trajectory. However, if the system provides the predicted cost in addition to each of these predicted trajectories, it would be clear that the much higher cost of getting 0.5 seconds behind the leading vehicle should cause the optimal trajectory not to include getting into that specific region that has such a high cost, even though the area between the two options in terms of an optimal trajectory was quite small.

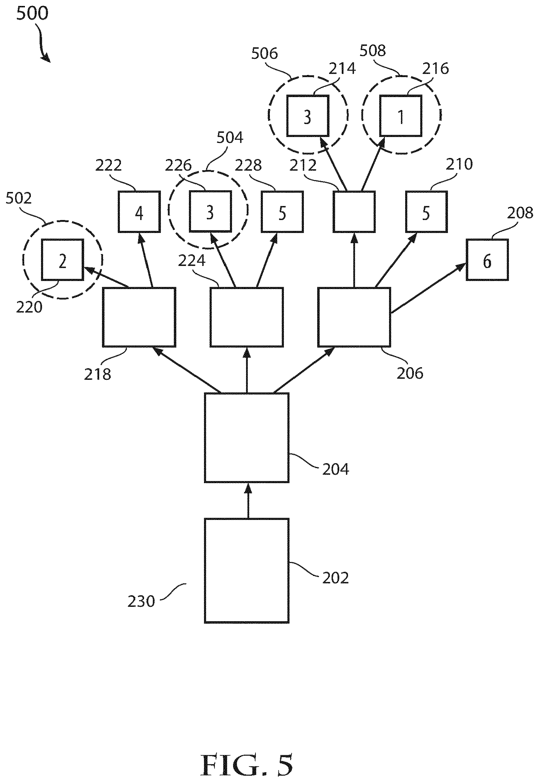

FIG. 5 illustrates an example tree structure 500 in which the machine learning model 302 can indicate that the likely outcomes are. For example, the machine learning model might output a single branch or trajectory 508 represented by branch 216 with a cost of 1. The planning stack 118 may simply confirm that the cost is low enough and choose that as the route for the AV 102. If the machine learning model 302 outputs a potential trajectory 506 as the branch 214 with a cost of 3, the planning stack 118 may determine that the cost is too high. However, it could start its search from that point and quickly identify branch 216 with a lower cost and thus more efficiently find the optimal solution.

The output of the machine learning model 302 might be a number of potential outcomes such as trajectories 502, 504, 506, 508. The planning stack 118 might just check these trajectories for an optimal choice from amongst this group.

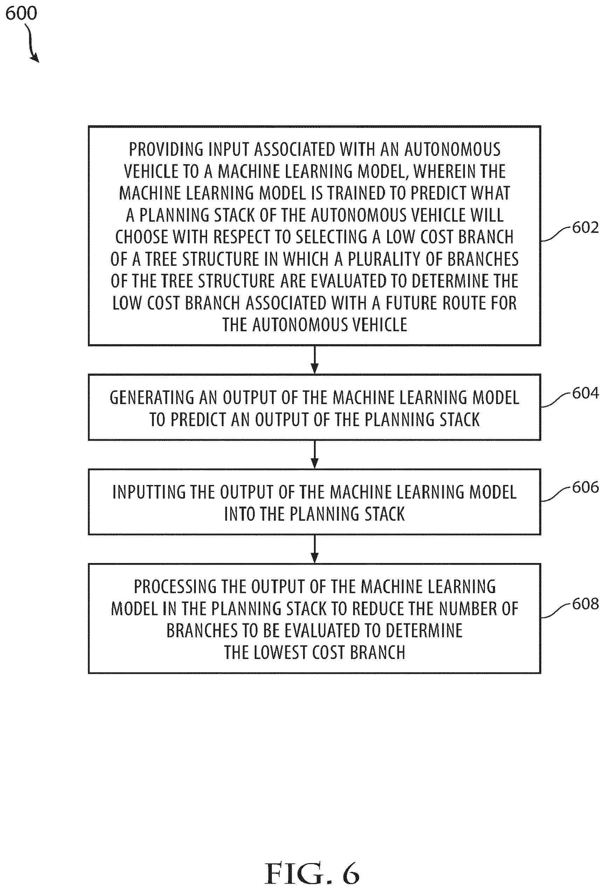

FIG. 6 illustrates an example 600 related to using a machine learning model to make the process of the planning stack 118 more efficient. The method 600 can include one or more of providing input associated with an autonomous vehicle to a machine learning model, wherein the machine learning model is trained to predict what a planning stack of the autonomous vehicle will choose with respect to selecting a low cost branch of a tree structure in which a plurality of branches of the tree structure are evaluated to determine the low or acceptable cost branch associated with a future route for the autonomous vehicle (602), generating an output of the machine learning model to predict an output of the planning stack (604) and inputting the output of the machine learning model into the planning stack (606).

The method can include processing the output of the machine learning model in the planning stack to reduce the number of branches to be evaluated to determine the lowest cost branch (608).

The output of the machine learning model can suggest at least one or more branches of the plurality of branches for the planning stack to evaluate for the low-cost branch. This can reduce the number of branches needed to be processed by the planning stack.

The method can further include one or more of selecting, via the planning stack, a lowest or acceptable cost branch based on the output of the machine learning model and evaluating a reduced set of branches in the tree structure to determine the lowest or acceptable cost branch, wherein the reduced set of branches is determined at least in part from the output of the machine learning model. The machine learning model can be trained based on on-road decisions made by the planning stack with respect to determining the lowest or acceptable cost branch associated with the future route of the autonomous vehicle. In another example, a simulation of the planning stack can also be used to generate outputs that can be used to train the machine learning model.

In another aspect, the method can include selecting a chosen branch from the tree structure based on at least in part the output of the machine learning model assisting to determine the chosen branch.

The output of the machine learning model can be used to reduce the plurality of branches to be evaluated by the planning stack 118 to a reduced set of branches based on the output of the machine learning model 304. In another aspect, the input to the planning stack 118 can be data associated with determining a future route of the autonomous vehicle.

In one aspect, the machine learning model 304 can be trained based on one or more of on-road decisions made by the planning stack 118 with respect to determining the low or acceptable cost branch associated with the future route of the autonomous vehicle 102, a first loss associated with predicting an optimal trajectory for the autonomous vehicle 102, a second loss associated with predicting a cost of one or more trajectories and a third loss associated with minimizing a predicted cost of the predicted optimal trajectory. Two or more of the first loss, the second loss and the third loss can be combined together.

An example system can include a processor and a computer-readable storage device storing instructions which, when executed by the processor, cause the processor to perform operations including providing input associated with an autonomous vehicle to a machine learning model, wherein the machine learning model is trained to predict what a planning stack of the autonomous vehicle will choose with respect to selecting a low cost branch of a tree structure in which a plurality of branches of the tree structure are evaluated to determine a lowest cost branch associated with a future route for the autonomous vehicle, generating an output of the machine learning model to predict an output of the planning stack and inputting the output of the machine learning model into the planning stack. The operations further can include processing the output of the machine learning model in the planning stack to reduce the number of branches to be evaluated to determine the lowest cost branch.

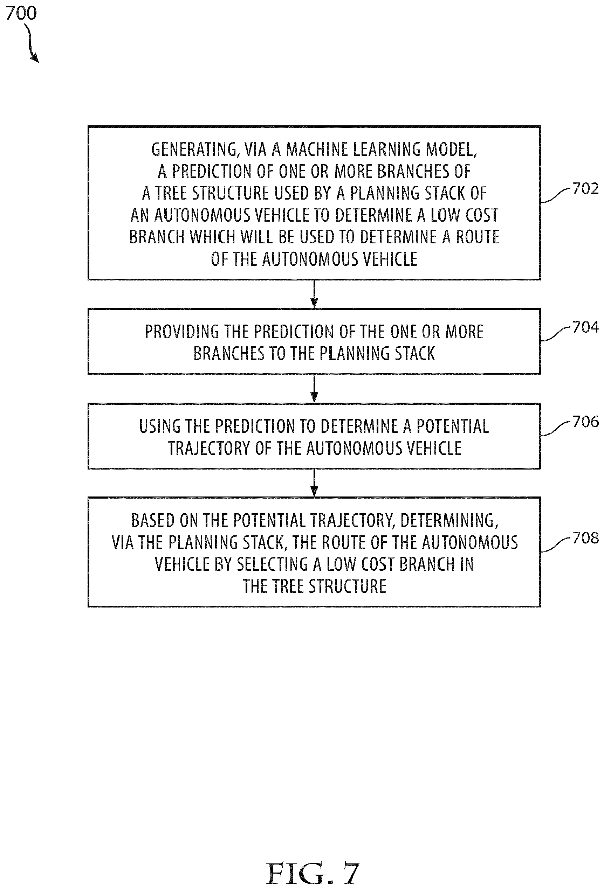

FIG. 7 illustrates another example method 700 that related to the process of generating the output of the machine learning model and using that to determine the route of the AV 102 via the planning stack 118. The method 700 can include one or more of generating, via a machine learning model, a prediction of one or more branches of a tree structure used by a planning stack of an autonomous vehicle to determine a low or acceptable cost branch which will be used to determine a route of the autonomous vehicle (702), providing the prediction of the one or more branches to the planning stack (704), using the prediction to determine a potential trajectory of the autonomous vehicle (706) and, based on the potential trajectory, determining, via the planning stack, the route of the autonomous vehicle by selecting a low cost branch in the tree structure (708).

The machine learning model can be trained based on on-road decisions made by the planning stack with respect to determining the lowest cost branch associated with the future route of the autonomous vehicle. The prediction of the machine learning model can be used to reduce a plurality of branches to be evaluated by the planning stack to a reduced set of branches.

In one aspect, a system 800 can include a processor and a computer-readable storage device 815 storing instructions which, when executed by the processor 810, cause the processor 810 to perform operations including one or more of generating, via a machine learning model, a prediction of one or more branches of a tree structure used by a planning stack of an autonomous vehicle to determine a low or acceptable cost branch which will be used to determine a route of the autonomous vehicle, providing the prediction of the one or more branches to the planning stack, using the prediction to determine a potential trajectory of the autonomous vehicle and, based on the potential trajectory, determining, via the planning stack, the route of the autonomous vehicle by selecting a low cost branch in the tree structure.

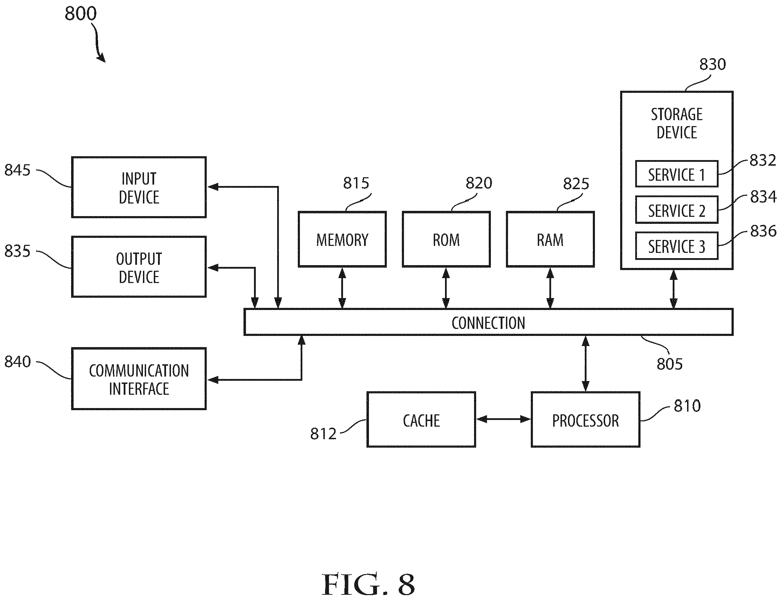

FIG. 8 illustrates an architecture of an example computing device 800 which can implement the various techniques described herein. For example, the computing device 800 can implement the autolabeler module 802 shown in FIG. 8. The components of the computing device 800 are shown in electrical communication with each other using a connection 805, such as a bus. The example computing device 800 includes a processing unit (CPU or processor) 810 and a computing device connection 805 that couples various computing device components including the computing device memory 815, such as read-only memory (ROM) 820 and random access memory (RAM) 825, to the processor 810. The computing device 800 can include a cache of highspeed memory connected directly with, in close proximity to, or integrated as part of the processor 810. The computing device 800 can copy data from the memory 815 and/or the storage device 830 to the cache 812 for quick access by the processor 810. In this way, the cache can provide a performance boost that avoids processor 810 delays while waiting for data. These and other modules can control or be configured to control the processor 810 to perform various actions.

Other computing device memory 815 may be available for use as well. The memory 815 can include multiple different types of memory with different performance characteristics. The processor 810 can include any general purpose processor and hardware or software service, such as service 1 832, service 2 834, and service 3 836 stored in storage device 830, configured to control the processor 810 as well as a special-purpose processor where software instructions are incorporated into the processor design. The processor 810 may be a self-contained system, containing multiple cores or processors, a bus, memory controller, cache, etc. A multi-core processor may be symmetric or asymmetric.

To enable user interaction with the computing device 800, an input device 845 can represent any number of input mechanisms, such as a microphone for speech, a touch-sensitive screen for gesture or graphical input, keyboard, mouse, motion input, speech and so forth. An output device 835 can also be one or more of a number of output mechanisms known to those of skill in the art, such as a display, projector, television, speaker device, etc. In some instances, multimodal computing devices can enable a user to provide multiple types of input to communicate with the computing device 800. The communications interface 840 can generally govern and manage the user input and computing device output. There is no restriction on operating on any particular hardware arrangement and therefore the basic features here may easily be substituted for improved hardware or firmware arrangements as they are developed.

Storage device 830 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 825, read only memory (ROM) 820, and hybrids thereof.

The storage device 830 can include services 832, 834, 836 for controlling the processor 810. Other hardware or software modules are contemplated. The storage device 830 can be connected to the computing device connection 805. In one aspect, a hardware module that performs a particular function can include the software component stored in a computer-readable medium in connection with the necessary hardware components, such as the processor 810, connection 805, output device 835, and so forth, to carry out the function.

For clarity of explanation, in some instances, the present technology may be presented as including individual functional blocks including functional blocks including devices, device components, steps or routines in a method embodied in software, or combinations of hardware and software.

In some examples, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods, according to the above-described examples, can be implemented using computer-executable instructions that are stored or otherwise available from computer-readable media. Such instructions can include, for example, instructions and data which cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code, etc. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can include hardware, firmware and/or software, and can take any of a variety of form factors. Typical examples of such form factors include laptops, smart phones, small form factor personal computers, personal digital assistants, rackmount devices, standalone devices, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components, computing devices and methods within the scope of the appended claims.

Claim language reciting "at least one of" a set indicates that one member of the set or multiple members of the set satisfy the claim. For example, claim language reciting "at least one of A and B" means A, B, or A and B.

This disclosure includes the following clauses:
Clause 1. A method including: providing input associated with an autonomous vehicle to a machine learning model, wherein the machine learning model is trained to predict what a planning stack of the autonomous vehicle will choose with respect to selecting a low cost branch of a tree structure in which a plurality of branches of the tree structure are evaluated to determine the low cost branch associated with a future route for the autonomous vehicle; generating an output of the machine learning model to predict an output of the planning stack; and inputting the output of the machine learning model into the planning stack.
Clause 2. The method of clause 1, further including: processing the output of the machine learning model in the planning stack to reduce a number of branches to be evaluated to determine the low cost branch.
Clause 3. The method of any previous clause, wherein the output of the machine learning model suggests at least one or more branches of the plurality of branches for the planning stack to evaluate for the low cost branch.
Clause 4. The method of any previous clause, further including: selecting, via the planning stack, the low cost branch based on the output of the machine learning model.
Clause 5. The method of any previous clause, further including: evaluating a reduced set of branches in the tree structure to determine the low cost branch, wherein the reduced set of branches is determined at least in part from the output of the machine learning model.
Clause 6. The method of any previous clause, wherein the machine learning model is trained based on one or more of on-road decisions made by the planning stack with respect to determining the low cost branch associated with the future route of the autonomous vehicle, a first loss associated with predicting an optimal trajectory for the autonomous vehicle, a second loss associated with predicting a cost of one or more trajectories and a third loss associated with minimizing a predicted cost of a predicted optimal trajectory.
Clause 7. The method of any previous clause, wherein the first loss, the second loss and the third loss are combined together.
Clause 8. The method of any previous clause, further including: selecting a chosen branch from the tree structure based on at least in part the output of the machine learning model assisting to determine the chosen branch.
Clause 9. The method of any previous clause, wherein the output of the machine learning model is used to reduce the plurality of branches to be evaluated by the planning stack to a reduced set of branches based on the output of the machine learning model.
Clause 10. A system including: a processor; and a computer-readable storage device storing instructions which, when executed by the processor, cause the processor to perform operations including: providing input associated with an autonomous vehicle to a machine learning model, wherein the machine learning model is trained to predict what a planning stack of the autonomous vehicle will choose with respect to selecting a low cost branch of a tree structure in which a plurality of branches of the tree structure are evaluated to determine a lowest cost branch associated with a future route for the autonomous vehicle; generating an output of the machine learning model to predict an output of the planning stack; and inputting the output of the machine learning model into the planning stack.
Clause 11. The system of clause 10, wherein the computer-readable storage device stores additional instructions which, when executed by the processor, cause the processor to perform operations further including: processing the output of the machine learning model in the planning stack to reduce a number of branches to be evaluated to determine the lowest cost branch.
Clause 12. The system of any of clauses 10-11, wherein the output of the machine learning model suggests at least one or more branches of the plurality of branches for the planning stack to evaluate for the lowest cost branch.
Clause 13. The system of any of clauses 10-12, wherein the computer-readable storage device stores additional instructions which, when executed by the processor, cause the processor to perform operations further including: selecting, via the planning stack, a lowest cost branch based on the output of the machine learning model.
Clause 14. The system of any of clauses 10-13, wherein the computer-readable storage device stores additional instructions which, when executed by the processor, cause the processor to perform operations further including: evaluating a reduced set of branches in the tree structure to determine the lowest cost branch, wherein the reduced set of branches is determined at least in part from the output of the machine learning model.
Clause 15. The system of any of clauses 10-14, wherein the machine learning model is trained based on on-road decisions made by the planning stack with respect to determining the lowest cost branch associated with the future route of the autonomous vehicle.
Clause 16. The system of any of clauses 10-15, wherein the computer-readable storage device stores additional instructions which, when executed by the processor, cause the processor to perform operations further including: selecting a chosen branch from the tree structure based on at least in part the output of the machine learning model assisting to determine the chosen branch.
Clause 17. The system of any of clauses 10-16, wherein the output of the machine learning model is used to reduce the plurality of branches to be evaluated by the planning stack to a reduced set of branches based on the output of the machine learning model.
Clause 18. A method including: generating, via a machine learning model, a prediction of one or more branches of a tree structure used by a planning stack of an autonomous vehicle to determine a low cost branch which will be used to determine a route of the autonomous vehicle; providing the prediction of the one or more branches to the planning stack; using the prediction to determine a potential trajectory of the autonomous vehicle; and based on the potential trajectory, determining, via the planning stack, the route of the autonomous vehicle by selecting a low cost branch in the tree structure.
Clause 19. The method of clause 18, wherein the machine learning model is trained based on on-road decisions made by the planning stack with respect to determining the low cost branch associated with the route or future route of the autonomous vehicle.
Clause 20. The method of clause 18 or clause 19, wherein the prediction of the machine learning model is used to reduce a plurality of branches to be evaluated by the planning stack to a reduced set of branches.
Clause 21. A system including: a processor; and a computer-readable storage device storing instructions which, when executed by the processor, cause the processor to perform operations including: generating, via a machine learning model, a prediction of one or more branches of a tree structure used by a planning stack of an autonomous vehicle to determine a low cost branch which will be used to determine a route of the autonomous vehicle; providing the prediction of the one or more branches to the planning stack; using the prediction to determine a potential trajectory of the autonomous vehicle; and based on the potential trajectory, determining, via the planning stack, the route of the autonomous vehicle by selecting a low cost branch in the tree structure.
Clause 22. The system of clause 21, wherein the machine learning model is trained based on on-road decisions made by the planning stack with respect to determining the low cost branch associated with the future route of the autonomous vehicle.
Clause 23. The system of clause 21 or clause 22, wherein the prediction of the machine learning model is used to reduce a plurality of branches to be evaluated by the planning stack to a reduced set of branches.
Clause 25. A computer-readable storge device storing instructions which, when executed by a processor, cause the processor to perform the operations or methods of any of claims 1-9.
Clause 25. An apparatus for wireless communications including one or more means for performing operations or methods according to any of Clauses 1-9.
Clause 26. A method comprising:
   providing input associated with an autonomous vehicle to a machine learning model, wherein the machine learning model is trained to predict what a planning stack of the autonomous vehicle will choose with respect to selecting a low cost branch of a tree structure in which a plurality of branches of the tree structure are evaluated to determine the low cost branch associated with a future route for the autonomous vehicle;
   generating an output of the machine learning model to predict an output of the planning stack; and
   inputting the output of the machine learning model into the planning stack.
Clause 27 The method of clause 26, further comprising:
   processing the output of the machine learning model in the planning stack to reduce a number of branches to be evaluated to determine the low cost branch.
**.** Clause 28. The method of clause 26, wherein the output of the machine learning model suggests at least one or more branches of the plurality of branches for the planning stack to evaluate for the low cost branch.
.Clause 29. The method of clause 26, further comprising:
   selecting, via the planning stack, the low cost branch based on the output of the machine learning model.
.Clause 30. The method of clause 26, further comprising:
   evaluating a reduced set of branches in the tree structure to determine the low cost branch, wherein the reduced set of branches is determined at least in part from the output of the machine learning model.
.Clause 31. The method of clause 26, wherein the machine learning model is trained based on one or more of on-road decisions made by the planning stack with respect to determining the low cost branch associated with the future route of the autonomous vehicle, a first loss associated with predicting an optimal trajectory for the autonomous vehicle, a second loss associated with predicting a cost of one or more trajectories and a third loss associated with minimizing a predicted cost of a predicted optimal trajectory.
. Clause 32. The method of clause 31, wherein the first loss, the second loss and the third loss are combined together.
**.** Clause 33. The method of clause 26, further comprising:
   selecting a chosen branch from the tree structure based on at least in part the output of the machine learning model assisting to determine the chosen branch.
. Clause 34. The method of clause 26, wherein the output of the machine learning model is used to reduce the plurality of branches to be evaluated by the planning stack to a reduced set of branches based on the output of the machine learning model.
.Clause 35. A system comprising:
   a processor; and
   a computer-readable storage device storing instructions which, when executed by the processor, cause the processor to perform operations comprising:
      providing input associated with an autonomous vehicle to a machine learning model, wherein the machine learning model is trained to predict what a planning stack of the autonomous vehicle will choose with respect to selecting a low cost branch of a tree structure in which a plurality of branches of the tree structure are evaluated to determine a lowest cost branch associated with a future route for the autonomous vehicle;
      generating an output of the machine learning model to predict an output of the planning stack; and
      inputting the output of the machine learning model into the planning stack.
.Clause 36. The system of clause 35, wherein the computer-readable storage device stores additional instructions which, when executed by the processor, cause the processor to perform operations further comprising:
   processing the output of the machine learning model in the planning stack to reduce a number of branches to be evaluated to determine the lowest cost branch.
.Clause 37. The system of clause 35, wherein the output of the machine learning model suggests at least one or more branches of the plurality of branches for the planning stack to evaluate for the lowest cost branch.
. Clause38. The system of clause 35, wherein the computer-readable storage device stores additional instructions which, when executed by the processor, cause the processor to perform operations further comprising:
   selecting, via the planning stack, a lowest cost branch based on the output of the machine learning model.
.Clause 39. The system of clause 35, wherein the computer-readable storage device stores additional instructions which, when executed by the processor, cause the processor to perform operations further comprising:
   evaluating a reduced set of branches in the tree structure to determine the lowest cost branch, wherein the reduced set of branches is determined at least in part from the output of the machine learning model.
.Clause 40. The system of clause 35, wherein the machine learning model is trained based on on-road decisions made by the planning stack with respect to determining the lowest cost branch associated with the future route of the autonomous vehicle.
.Clause 41. The system of clause 35, wherein the computer-readable storage device stores additional instructions which, when executed by the processor, cause the processor to perform operations further comprising:
   selecting a chosen branch from the tree structure based on at least in part the output of the machine learning model assisting to determine the chosen branch.
.Clause 42. The system of clause 35, wherein the output of the machine learning model is used to reduce the plurality of branches to be evaluated by the planning stack to a reduced set of branches based on the output of the machine learning model.
. Clause 43. A method comprising:
   generating, via a machine learning model, a prediction of one or more branches of a tree structure used by a planning stack of an autonomous vehicle to determine a low cost branch which will be used to determine a route of the autonomous vehicle;
   providing the prediction of the one or more branches to the planning stack;
   using the prediction to determine a potential trajectory of the autonomous vehicle; and
   based on the potential trajectory, determining, via the planning stack, the route of the autonomous vehicle by selecting a low cost branch in the tree structure.
.Clause 44. The method of clause 43, wherein the machine learning model is trained based on on-road decisions made by the planning stack with respect to determining the low cost branch associated with the route of the autonomous vehicle.
.Clause 45. The method of clause 43, wherein the prediction of the machine learning model is used to reduce a plurality of branches to be evaluated by the planning stack to a reduced set of branches.
.Clause 46. A system comprising:
   a processor; and
   a computer readable storge device storing instructions which, when executed by the processor, cause the processor to perform operations comprising:
      generating, via a machine learning model, a prediction of one or more branches of a tree structure used by a planning stack of an autonomous vehicle to determine a low cost branch which will be used to determine a route of the autonomous vehicle;
      providing the prediction of the one or more branches to the planning stack;
      using the prediction to determine a potential trajectory of the autonomous vehicle; and
      based on the potential trajectory, determining, via the planning stack, the route of the autonomous vehicle by selecting a low cost branch in the tree structure.

## Claims

1. A method comprising:
providing input associated with an autonomous vehicle to a machine learning model, wherein the machine learning model is trained to predict what a planning stack of the autonomous vehicle will choose with respect to selecting a low cost branch of a tree structure in which a plurality of branches of the tree structure are evaluated to determine the low cost branch associated with a future route for the autonomous vehicle;
generating an output of the machine learning model to predict an output of the planning stack; and
inputting the output of the machine learning model into the planning stack.
generating, via a machine learning model, a prediction of one or more branches of a tree structure used by a planning stack of an autonomous vehicle to determine a low cost branch which will be used to determine a route of the autonomous vehicle;
providing the prediction of the one or more branches to the planning stack;
using the prediction to determine a potential trajectory of the autonomous vehicle; and
based on the potential trajectory, determining, via the planning stack, the route of the autonomous vehicle by selecting a low cost branch in the tree structure.

2. The method of claim 1, further comprising:
processing the output of the machine learning model in the planning stack to reduce a number of branches to be evaluated to determine the low cost branch.

3. The method of claim 1 or 2, wherein the output of the machine learning model suggests at least one or more branches of the plurality of branches for the planning stack to evaluate for the low cost branch.

4. The method of any preceding claim, further comprising:
selecting, via the planning stack, the low cost branch based on the output of the machine learning model.

5. The method of any preceding claim, further comprising:
evaluating a reduced set of branches in the tree structure to determine the low cost branch, wherein the reduced set of branches is determined at least in part from the output of the machine learning model.

6. The method of any preceding claim, wherein the machine learning model is trained based on one or more of on-road decisions made by the planning stack with respect to determining the low cost branch associated with the future route of the autonomous vehicle, a first loss associated with predicting an optimal trajectory for the autonomous vehicle, a second loss associated with predicting a cost of one or more trajectories and a third loss associated with minimizing a predicted cost of a predicted optimal trajectory.

7. The method of claim 6, wherein the first loss, the second loss and the third loss are combined together.

8. The method of any preceding claim, further comprising:
selecting a chosen branch from the tree structure based on at least in part the output of the machine learning model assisting to determine the chosen branch.

9. The method of any preceding claim, wherein the output of the machine learning model is used to reduce the plurality of branches to be evaluated by the planning stack to a reduced set of branches based on the output of the machine learning model.

10. A system comprising:
a processor; and
a computer-readable storage device storing instructions which, when executed by the processor, cause the processor to perform the method of any of claims 1 to 9.

11. The system of claim 10, wherein the machine learning model is trained based on on-road decisions made by the planning stack with respect to determining the lowest cost branch associated with the future route of the autonomous vehicle.

12. A method comprising:
generating, via a machine learning model, a prediction of one or more branches of a tree structure used by a planning stack of an autonomous vehicle to determine a low cost branch which will be used to determine a route of the autonomous vehicle;
providing the prediction of the one or more branches to the planning stack;
using the prediction to determine a potential trajectory of the autonomous vehicle; and
based on the potential trajectory, determining, via the planning stack, the route of the autonomous vehicle by selecting a low cost branch in the tree structure.

13. The method of claim 12, wherein the machine learning model is trained based on on-road decisions made by the planning stack with respect to determining the low cost branch associated with the route of the autonomous vehicle.

14. The method of claim 12 or 13, wherein the prediction of the machine learning model is used to reduce a plurality of branches to be evaluated by the planning stack to a reduced set of branches.

15. A system comprising:
a processor; and
a computer readable storge device storing instructions which, when executed by the processor, cause the processor to perform the method of any of claims 12 to 14.
